# EUROPÄISCHE PATENTANMELDUNG

(11) **EP 0 788 902 A1**
(43) Veröffentlichungstag der Anmeldung: **13.08.1997**
(21) Anmeldenummer: 96200644.1
(22) Anmeldetag: 08.03.1996
(51) Int. Cl.: B60D 1/04, B60D 1/46, B62D 53/06

(54) **Mehrgliedriger Anhänger**

(30) Priorität: 07.02.1996 NL 1002265
(71) Anmelder: KONINKLIJKE NOOTEBOOM TRAILERS B.V., NL-6603 BV Wijchen (NL)
(72) Erfinder: Van de Vondervoort, Vincentius Henricus Antony, 6605 EA Wijchen (NL)
(74) Vertreter: Bartelds, Erik

(57) **Zusammenfassung**

Die Erfindung betrifft einen Anhänger (1), der mit einem mit einer Zugmaschine (5) zu verbindenden, um eine senkrechte stehende Achse (R) der Zugmaschine (5) schwenkbaren Kupplungsteil (2) und mit wenigstens zwei miteinander und mit dem Kupplungsteil (2) zu verbindenden, jeweils wenigstens einen Radsatz (8; 38) aufweisenden, fahrbaren Wagenteilen (3, 4) versehen ist. Wenigstens der in der Fahrtrichtung gesehen vordere fahrbare Wagenteil (3) ist für die Verbindung mit dem Kupplungsteil (2) mit wenigstens einem Verbindungshaken (17) versehen. Das Kupplungsteil (2) ist mit wenigstens einem mit dem damit zu verbindenden fahrbaren Wagenteil (3) zusammenwirkenden Andrückelement (26) versehen, das in der Länge einstellbar ist und das aus einer Anzahl lösbar miteinander verbundener Teile (42, 31) bestehen kann.

Durch Anwendung einer einfachen Hakenverbindung können die Wagenteile schnell gekuppelt oder entkuppelt werden.

Die Erfindung betrifft weiter einen fahrbaren Wagenteil (3, 4) und ein Kupplungsteil (2) zur Anwendung in einem solchen Anhänger (1).

## Beschreibung

Die Erfindung betrifft einen Anhänger, der mit einem mit einer Zugmaschine zu verbindenden, um eine senkrechte stehende Achse der Zugmaschine schwenkbaren Kupplungsteil und mit wenigstens zwei miteinander und mit dem Kupplungsteil zu verbindenden, jeweils wenigstens einen Radsatz aufweisenden, fahrbaren Wagenteilen versehen ist. Ein solcher Anhänger, der auch wohl als modularer Anhänger bezeichnet wird, ist bekannt und wird im allgemeinen für den Transport von relativ schweren Gegenständen eingesetzt. Unter "Anhänger" wird dabei übrigens auch ein Auflieger verstanden.

Beim bekannten Anhänger sind die einzelnen Teile oder Module des Wagens im allgemeinen miteinander mittels waagerechter Zapfen-und-Zapfenloch-Verbindungen verbunden. Zu diesem Zweck sind die Wagenteile an ihren zu kuppelnden Enden mit einer Reihe paralleler, flacher Ösen versehen, deren Zwischenraum in etwa der Dicke der Ösen entspricht. In jedem dieser Ösen ist quer zur Fahrtrichtung eine waagerechte Öffnung für einen Verbindungsstift angebracht. Zum Verbinden der Wagenteile werden diese aneinander gesetzt, wobei die Ösen zwischeneinander geschoben werden, wonach der Stift durch die Öffnungen hindurchgeschoben wird. Diese Verbindungsweise hat den Nachteil, daß die beiden Wagenteile genau ausgerichtet werden müssen, damit alle Öffnungen miteinander fluchten, da der Verbindungsstift mit relativ enger Paßform in diese Öffnungen paßt. Dies bringt mit sich, daß die Verbindung zwischen den Wagenteilen vorzugsweise in einer Werkstatt zustande gebracht wird oder gelöst wird, wo Hebezeug zur Verfügung steht, um die Wagenteile in der richtigen Weise aneinanderzustellen. Dadurch ist es nur schwer möglich, die Konfiguration des Wagens der zu erwartenden Ladung anzupassen, so daß oft mit einem unnötig langen Anhänger herumgefahren wird.

Die Erfindung bezweckt nun die Schaffung eines Anhängers der gattungsgemäßen Art, deren Konfiguration leicht der Beladung angepaßt werden kann. Nach der Erfindung wird dies dadurch erreicht, daß wenigstens der in der Fahrtrichtung gesehen vordere fahrbare Wagenteil für die Verbindung mit dem Kupplungsteil mit wenigstens einem Verbindungshaken versehen ist. Durch Anwendung einer einfachen Hakenverbindung können die Wagenteile schnell gekuppelt oder entkuppelt werden. Dieses Kuppeln oder Entkuppeln kann außerdem "im Gelände" erfolgen, so daß es möglich ist, beispielsweise eine nicht-beladene Fahrt mit nur einem fahrenden Wagenteil hinter der Zugmaschine zu machen, auf welchem Wagenteil dann die anderen einzusetzenden Wagenteile befördert werden können. Dadurch wird die Länge des Lastzugs erheblich eingeschränkt. Vor Ort kann dann danach durch Hintereinanderstellen der mitgeführten Wagenteile der Anhänger in die gewünschte Konfiguration gebracht werden, wonach die zu befördernde Ladung geladen werden kann.

Vorzugsausführungsformen des Anhängers nach der Erfindung sind Gegenstand der Folge-Ansprüche 2 bis einschließlich 7.

Die Erfindung betrifft auch einen fahrbaren Wagenteil zur Anwendung in einem Anhänger im vorstehend beschriebenen Sinne, der mit einer Tragekonstruktion und wenigstens einem Radsatz versehen ist sowie mit wenigstens einem in der Fahrtrichtung gesehen an der Vorderseite angebrachten Verbindungshaken.

Schließlich betrifft die Erfindung noch ein Kupplungsteil für die Anwendung in einem Anhänger im vorstehend beschriebenen Sinne.

Die Erfindung wird nun anhand eines Beispiels erläutert, wobei auf die beigefügte Zeichnung verwiesen wird, in der
Figur 1 eine perspektivische Ansicht eines erfindungsgemäßen Anhängers ist in der Kombination mit einer Zugmaschine, wobei der Anhänger für die Beförderung einer Ladung fertig ist;
Figur 2 eine mit der Figur 1 übereinstimmende Ansicht des Anhängers ist, wobei ein Fahrbarer Wagenteil auf einem anderen fahrbaren Wagenteil befördert wird;
Figur 3 eine teilweise aufgerissene perspektivische Ansicht eines vorderen fahrbaren Wagenteils mit Verbindungshaken und einer Vorderseite eines damit verbindbaren dahinter befindlichen fahrbaren Wagenteils ist;
Figur 4 eine perspektivische rückseitige Ansicht eines Kupplungsteils eines erfindungsgemäßen Anhängers an einer Zugmaschine ist;
Figur 5A und B teilweise geschnittene Seitenansichten sind, in denen schematisch das mit dem Kupplungsteil Verbinden eins vorderen fahrbaren Wagenteils gezeigt wird;
Figur 6A und B mit Figur 5A und B übereinstimmende Ansichten des Verbindens eines Tiefladerteils mit dem Kupplungsteils sind, und
Figur 7 eine mit der Figur 5B übereinstimmende Ansicht im vergrößerten Maßstab des Kupplungsteils und des damit verbundenen vorderen Fahrbaren Wagenteils in verriegeltem Zustand ist.

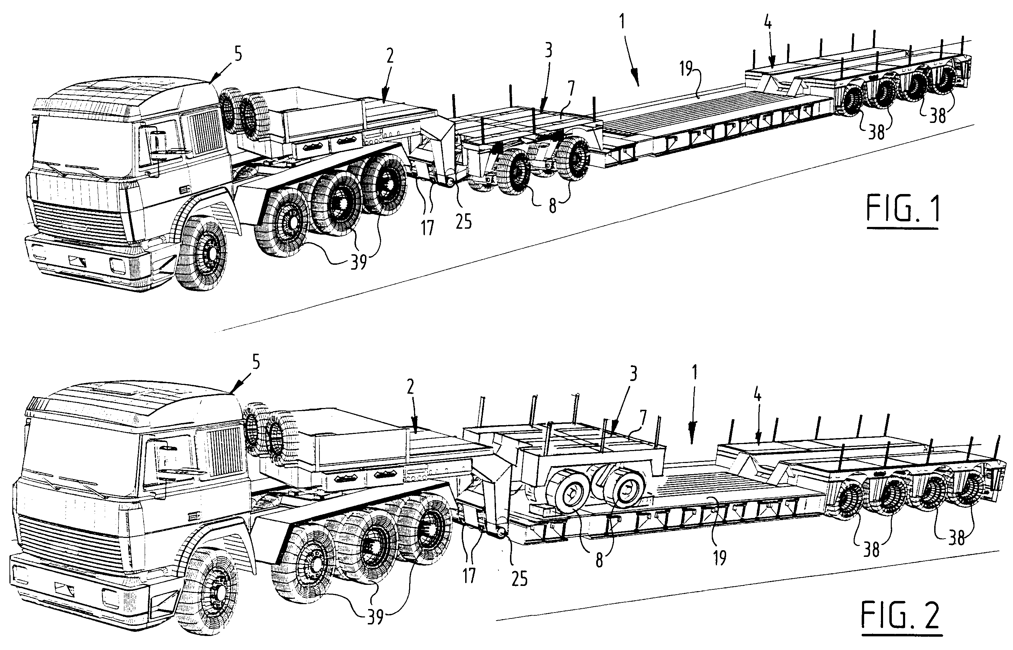

Ein Anhänger 1 (Figur 1) nach der Erfindung besteht aus einem mit einer Zugmaschine 5 zu verbindenden Kupplungsteil oder Schwanenhals 2, einem dahinter angeordneten, mit dem Kupplungsteil 2 verbundenen vorderen fahrbaren Wagenteil 2 und einem mit dem Wagenteil 3 verbundenen hinteren fahrbaren Wagenteil 4 in der Form eines Tiefladers. Die beiden fahrbaren Wagenteile 3 und 4 sind jeweils mit wenigstens einem Radsatz versehen. In dem gezeigten Beispiel umfaßt der vordere fahrbare Wagenteil 3 zwei Radsätze 8 (wobei ein Radsatz als eine Anzahl von Rädern definiert wird, die bei Geradeausfahrt um dieselbe Achslinie rotierbar sind), und weist der Tiefladerteil vier Radsätze 38 auf. Der vordere fahrbare Wagenteil 3 dient dabei dazu, die Anzahl der Achsen vor der Ladung mit der Anzahl der Achsen dahinter zur Übereinstimmung zu bringen, wodurch die Achsbelastung gleichmäßig verteilt wird, wenn der Tieflader 4 schwer beladen wird. Durch eine solche gleichmäßige Verteilung der Achsbelastung wird die Beförderungskapazität des Anhängers maximalisiert.

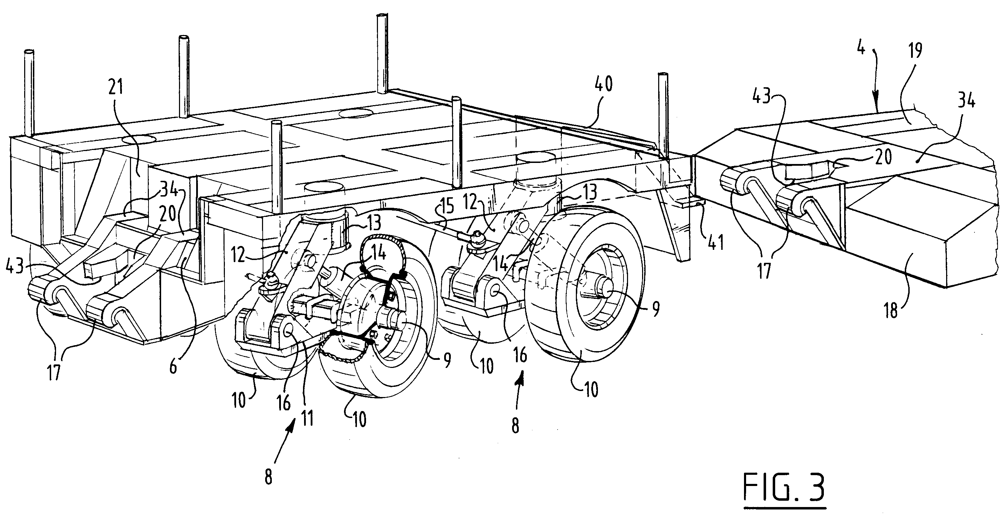

Zum Kuppeln des vorderen fahrbaren Wagenteils 3 an das Kupplungsteil 2 und des hinteren fahrbaren Wagenteils 4 an das vordere fahrbare Wagenteil 3 werden nach der Erfindung Verbindungshaken 17 (Figur 3) eingesetzt. Eine von diesem Haken 17 gebildete Verbindung kann einfach zustande gebracht oder wieder gelöst werden, wodurch es möglich ist, den Anhänger 1 "im Gelände" zu der gewünschten Konfiguration zusammenzustellen. So kann, wenn der Anhänger 1 unbeladen zu einem Ort befördert wird, wo eine Ladung abgeholt werden soll, dieser Anhänger 1 weitestgehend verkürzt werden, um das Fahrverhalten des Lastzugs zu verbessern. Dadurch kann dann der Lastzug auch auf relative engen und kurvigen Strecken zu einer Ladung gefahren werden. Dazu kann dann beispielsweise die Hakenverbindung zwischen den beiden fahrbaren Wagenteilen 3 und 4 gelöst werden, wonach der vordere fahrbare Wagenteil 3 von der Zugmaschine 5 auf die Ladefläche 19 des hinteren Wagenteils 4 gefahren wird und danach die Hakenverbindung zwischen dem vorderen fahrbaren Wagenteil 3 und dem Kupplungsteil 2 gelöst und der hintere fahrbare Wagenteil 4 mittels seiner Verbindungshaken 17 direkt an dem Kupplungsteil 17 befestigt wird (Figur 2). An dem Ort, an dem die Ladung abgeholt werden soll, kann dann der hintere Wagenteil wieder vom Kupplungsteil abgekuppelt werden, die Zugmaschine wird mit dem Kupplungsteil 2 mit dem vorderen fahrbaren Wagenteil 3 verbunden und dieser vordere fahrbare Wagenteil 3 danach vom fahrbaren hinteren Wagenteil 4 heruntergefahren und damit verbunden werden.

Der vordere fahrbare Wagenteil 3 weist dabei eine Tragekonstruktion 6 auf, an der eine Anzahl von Radsätzen befestigt sind, und die an der Oberseite eine Ladefläche 7 aufweist. Jeder Radsatz 8 umfaßt dabei an beiden Seiten der Längsachse des Wagenteils 3 eine Satz Radachsen 9, um die Räder 10 rotierbar sind. Die Achsen 9 sind jeweils an einem unteren Längsträger 11 angebracht, der mittels einer Schwenkachse 16 mit einem oberen Längsträger 12 verbunden ist. Dieser obere Längsträger ist um eine senkrecht stehende Achse 13 schwenkbar. Zwischen den beiden Längsträgern 11 und 12 ist dabei eine Feder-Dämpfungseinheit 14 angebracht. Der obere Längsträger 12 ist weiter über eine Lenkstange 15 mit einem (hier nicht dargestellten) Lenksystem verbunden.

Sowohl der vordere fahrbare Wagenteil 3 als auch der hintere fahrbare Wagenteil 4 ist an seiner Vorderseite (in der Fahrtrichtung gesehen) mit zwei Verbindungshaken 17 versehen, die dazu bestimmt sind, mit Aufnahmeelementen 32 des Kupplungsteils 2 beziehungsweise entsprechenden Aufnahmeelementen des vorderen fahrbaren Wagenteils 3 (hier nicht gezeigt) zusammenzuwirken. Die Verbindungshaken 17 sind dabei an der Tragekonstruktion 6 beziehungsweise 18 des fahrbaren Wagenteils 3 oder 4 befestigt. Zwischen den beiden Verbindungshaken 17 ist weiter ein Aufnahmeraum 20 mit Sperrplatten 43 für ein nachstehend zu erörterndes Zentrier- und Sperrorgan 29 angebracht, sowie eine Stützfläche 34 für ein ebenfalls nachstehend zu besprechendes Andrückelement 26 oder 40. Die beiden Stützflächen 34 sind direkt mit der Trägerkonstruktion 6 beziehungsweise 18 der Wagenteile 3 und 4 verbunden. Um die Baulänge des vorderen Wagenteils 3 weitestgehend zu beschränken, ist die Stützfläche 34 dabei in einer Aussparung 21 in der Ladefläche 7 aufgenommen, wodurch dennoch ein ausreichender Abstand zwischen der Stützfläche 34 und dem Verbindungshaken 17 bewirkt wird.

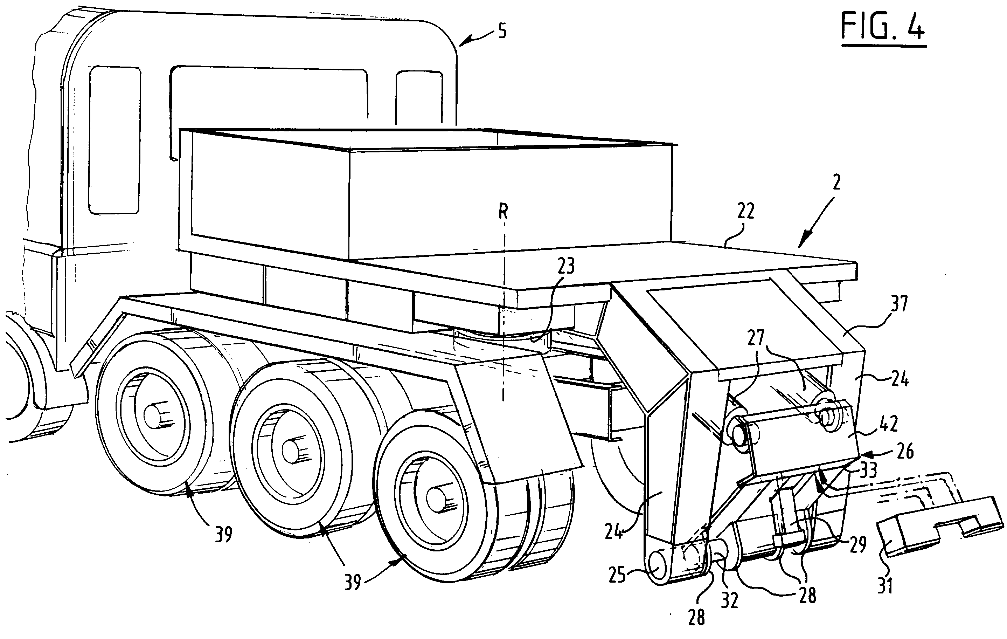

Das Kupplungsteil 2 (Figur 4) umfaßt einen Auflageteil 22, der rotierbar um die stehende Achslinie R eines Drehstifts 23 auf der Zugmaschine 5 gelagert ist. Der Auflageteil 22 ist an seiner Rückseite mit einer hydraulischen Winde 35 versehen, womit der Auflageteil gegenüber der Rückseite der Zugmaschine 5 in der Höhe variiert werden kann. Während des normalen Betriebs ist die Winde 35 vollständig eingezogen, um die gegenseitige Drehbewegung der Zugmaschine 5 und des Anhängers 1 nicht zu behindern. An dem Auflagenteil 22 sind zwei geknickte Arme 24 befestigt, die an ihren Enden Lager für eine durchgehende Achse 25 tragen. Die Arme 24 sind dabei an ihrer Oberseite 37 abgeschrägt, wodurch das Kupplungsteil 2 möglichst wenig Nutzraum in Anspruch nimmt. Auf der rotierbar gelagerten Achse 25 ist mittels Ösen 28 ein Andrückelement 26 befestigt, welches Andrückelement 26 aus einem blechförmigen Schwenkarm 30 und einem daran befestigten Stempel 42 besteht. Das Andrückelement 26 wird in Bewegung versetzt durch zwei fest mit dem Auflageteil 22 verbundene hydraulische Zylinder 27. Der eigentliche Stempel 42 ist in der Länge einstellbar, indem daran ein oder mehr Füllstücke 31 befestigt werden. Der Schwenkarm 30 trägt weiter noch ein T-förmiges Zentrier- und Sperrorgan 29, das mit der Zentrieröffnung 20 und den Sperrblechen 43 in dem fahrbaren Wagenteil 3 oder 4 zusammenwirkt. Die Achse 25 weist weiter zwei exzentrische Teile 32 auf, die als Aufnahmeelemente für die Verbindungshaken 17 dienen und die als Folge einer exzentrischen Anordnung in der Höhe einstellbar sind, wenn die Achse 25 verdreht wird.

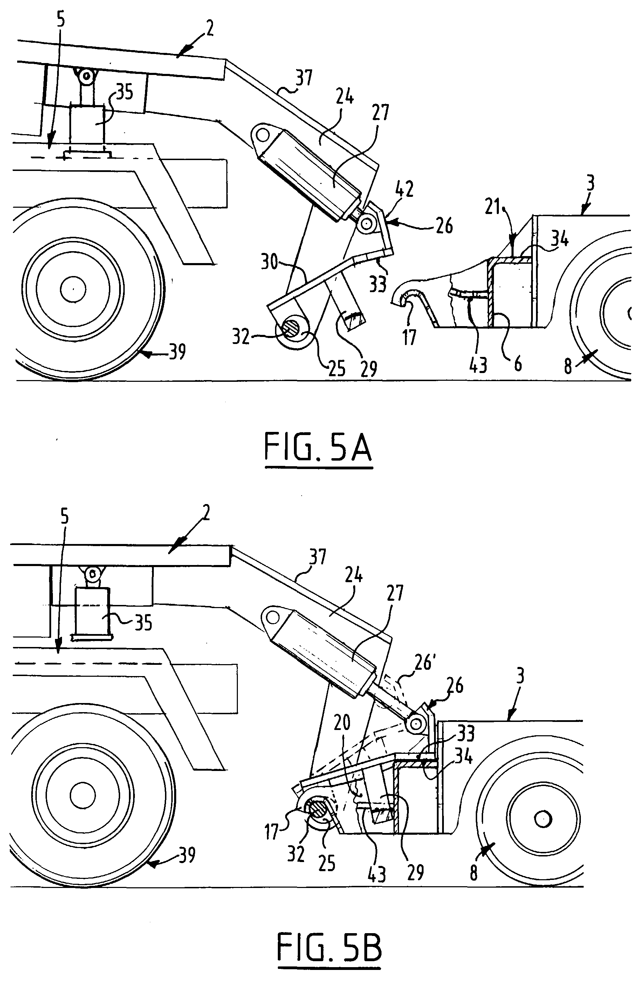

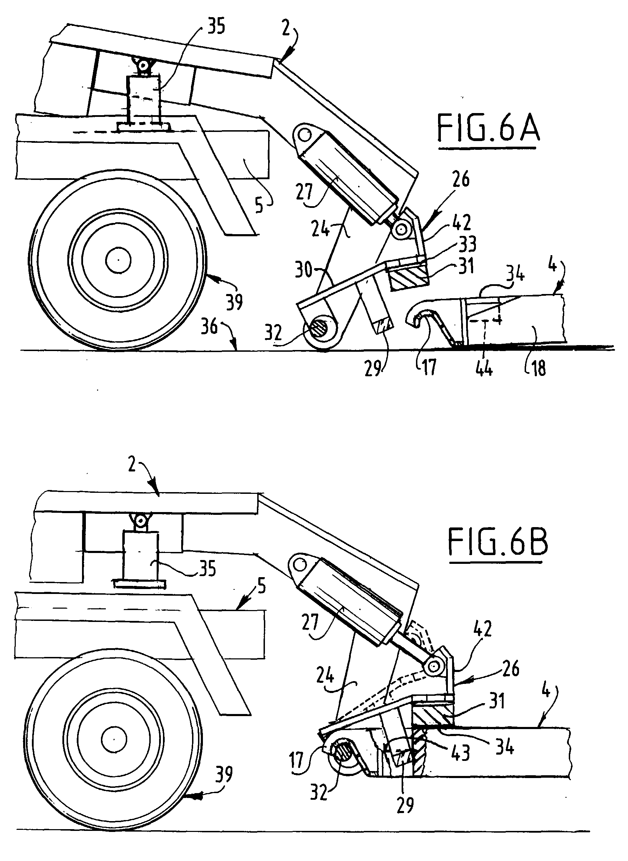

Die Wirkung des Kupplungsteils 2 ist wie folgt. Wenn ein fahrbarer Wagenteil 3 oder 4 mit dem Kupplungsteil 2 verbunden werden soll, wird das Kupplungsteil 2 in eine relativ tiefstgelegene Ausgangsposition gebracht (Figur 5A und 6A), indem die hydraulische Winde vollständig oder teilweise eingezogen wird. Dabei wird im Falle des Anhakens des Tiefladerteils 4 das Kupplungsteil 2 sogar mit seinem Ende nahezu auf den Boden 36 zu liegen kommen. Auch werden die hydraulischen Zylinder 27 eingezogen. Dabei wird das Andrückelement 26 nach oben geschwenkt, während die Achse 25 in der Zeichnung im Gegenuhrzeigersinn verdreht wird, wodurch die exzentrische Aufnahmeelemente 32 in ihren niedrigsten Stand gebracht werden. Das Kupplungsteil 2 und die damit zu verbindende Vorderseite des fahrbaren Wagenteils 3 oder 4 sind nunmehr also relativ zueinander in eine derartige Höhe gebracht worden, daß die Verbindungshaken 17 über dem dazu gehörenden Aufnahmeelement 32 gelegen sind. Danach wird die Zugmaschine 5 mit dem Kupplungsteil 2 zum Wagenteil 3 oder 4 gefahren, bis die Aufnahmeelemente 32 unter die Verbindungshaken 17 und das Zentrier- und Sperrorgan 29 unter die Sperrbleche 43 geschoben sind.

Danach werden die hydraulischen Zylinder 27 wieder aktiviert, wodurch das Andrückelement 26 von seiner punktiert dargestellten Stellung aus weiter nach unten geschwenkt wird (Fig. 5B und 6B), bis das Andrückelement 26 auf der Stützfläche 34 des fahrbaren Wagenteils 3 oder 4 ruht. Dabei wird gleichzeitig die Achse 25 im Uhrzeigersinn gedreht, wodurch die Aufnahmeelemente 32 nach oben bewegt werden und so in die Verbindungshaken 17 greifen. Das Zentrier- und Sperrorgan 29 fällt dabei unter den Sperrblechen 43 in die Zentrieröffnung 20 in der Vorderseite des fahrbaren Wagenteils 3 oder 4. Die Druckkraft des Andrückelements 26 wird dabei unmittelbar in die Trägerkonstruktion 6 beziehungsweise 18 des Wagenteils geführt. Um mögliche Höhenunterschiede zwischen den fahrbaren Wagenteilen 3 und 4 zu überbrücken, können dabei ein oder mehr Füllstücke 31 zum Einstellen der Länge des Andrückelements 26 verwendet werden.

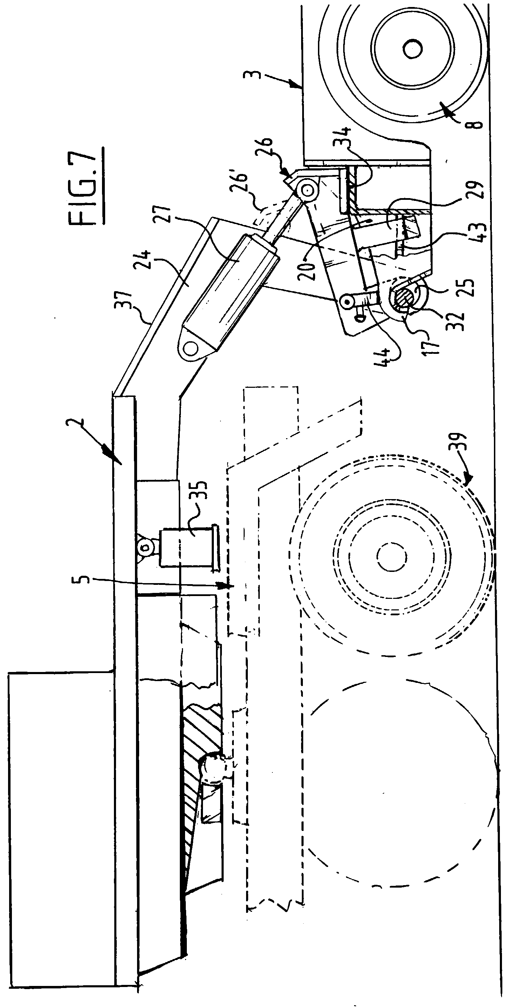

Indem nun die hydraulischen Zylinder 27 noch weiter hinausgestreckt werden, "kippt" das Andrückelement 26 gleichsam um den Punkt, mit dem dieses auf der Stützfläche 34 des fahrbaren Wagenteils 3 oder 4 ruht, wodurch die Aufnahmeelemente straff in die Haken 17 gezogen werden, und das T-förmige Organ 29 von der Unterseite aus an die Bleche 43 gedrückt wird. So wird eine steife Verbindung zwischen dem Kupplungsteil 2 und dem fahrbaren Wagenteil 3 oder 4 erhalten. Dadurch wird darüber hinaus das nach vorne Kippen des Kupplungsteils 2 vermieden, wenn die Zugmaschine 5 von dem Anhänger 1 abgekuppelt wird. Neben der gezeigten Sperrung mittels des T-förmigen Organs 29 und der Bleche 43 kann eine ergänzende Verriegelung vorgesehen sein, beispielsweise in Form eines über den Aufnahmeelementen 32 auf dem Kupplungsteil angebrachtem, schwenkbaren Verriegelungselements 44, das von einer (nicht dargestellten) Ruhestellung aus in eine Sperrposition (Fig. 7) geschwenkt werden kann, in der die Haken 17 zwischen diesem Verriegelungselement 44 und deren Aufnahmeelement 32 eingeschlossen werden.

Die Verbindung zwischen dem vorderen fahrbaren Wagenteil 3 und dem hinteren fahrbaren Wagenteil 4 wird in ähnlicher Weise zustande gebracht, wie dies vorstehend beschrieben worden ist. Dabei wird letztendlich das Andrückelement 40 des vorderen fahrbaren Wagenteils 3 mit dem unter einem Stempel 41 anzubringenden Füllstück 31 auf der Stützfläche 34 des hinteren fahrbaren Wagenteils 4 ruhen.

Indem für die Verbindung der fahrbaren Wagenteile 3 oder 4 mit dem Kupplungsteil 2 einfache Hakenverbindungen benutzt werden, sind dafür keine Hilfsmittel erforderlich, so daß die Verbindung 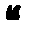 im Gelände 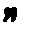 zustande gebracht oder gelöst werden kann. Dadurch kann die Konfiguration des Anhänger an jedem gewünschten Standort einer zu befördernden Ladung angepaßt werden, wodurch die Flexibilität und Einsatzfähigkeit des Anhängers stark vergrößert werden.

Obwohl die Erfindung vorstehend anhand einer Ausführungsform mit zwei fahrbaren Wagenteilen erläutert worden ist, wird es dem Fachmann klar sein, daß sie nicht darauf beschränkt ist. Auch eine größere Anzahl mit Hakenverbindungen gekuppelter Wagenteile oder Module ist somit möglich.

## Patentansprüche

1. Anhänger (1), der mit einem mit einer Zugmaschine (5) zu verbindenden, um eine senkrechte stehende Achse (R) der Zugmaschine (5) schwenkbaren Kupplungsteil (2) und mit wenigstens zwei miteinander und mit dem Kupplungsteil (2) zu verbindenden, jeweils wenigstens einen Radsatz (8; 38) aufweisenden, fahrbaren Wagenteilen (3, 4) versehen ist, **dadurch gekennzeichnet**, daß wenigstens der in der Fahrtrichtung gesehen vordere fahrbare Wagenteil (3) für die Verbindung mit dem Kupplungsteil (2) mit wenigstens einem Verbindungshaken (17) versehen ist.

2. Anhänger (1) nach Anspruch 1, **dadurch gekennzeichnet**, daß jedes der fahrbaren Wagenteile (3, 4) für die Verbindung mit dem in der Fahrtrichtung vorderen Wagenteil (3) mit wenigstens einem Verbindungshaken (17) versehen ist.

3. Anhänger (1) nach Anspruch 1 oder 2, **dadurch gekennzeichnet**, daß das Kupplungsteil (2) mit wenigstens einem mit dem damit zu verbindenden fahrbaren Wagenteil (3) zusammenwirkenden Andrückelement (26) versehen ist, das in der Länge einstellbar ist.

4. Anhänger (1) nach Anspruch 3, **dadurch gekennzeichnet**, daß das Andrückelement (26) aus einer Anzahl lösbar miteinander verbundener Teile (42, 31) besteht.

5. Anhänger (1) nach Anspruch 3 oder 4, **dadurch gekennzeichnet**, daß das Andrückelement (26) schwenkbar um eine liegende Achse (25) im Kupplungsteil (2) gelagert ist und das Kupplungsteil (2) wenigstens ein mit dem Verbindungshaken (17) zusammenwirkendes, in der Höhe einstellbares Aufnahmeelement (32) umfaßt, das exzentrisch auf der Schwenkachse (25) des Andrückelements angebracht ist.

6. Anhänger (1) nach einem der Ansprüche 3 bis 5, **dadurch gekennzeichnet**, daß der mit dem Kupplungsteil (2) zu verbindende fahrbare Wagenteil (3) mit einer sich bis zu seiner Tragekonstruktion (6) erstreckenden Aussparung (21) zur Aufnahme des Andrückelements (26) versehen ist.

7. Anhänger (1) nach einem der vorigen Ansprüche, **dadurch gekennzeichnet**, daß der in der Fahrtrichtung gesehene hintere fahrbare Wagenteil (4) einen Tieflader bildet.

8. Fahrbarer Wagenteil (3, 4) zur Anwendung in einem Anhänger (1) nach einem der vorigen Ansprüche, versehen mit einer Tragekonstruktion (6, 18) und wenigstens einem Radsatz (8; 38), sowie wenigstens einem in der Fahrtrichtung gesehen an der Vorderseite angebrachten Verbindungshaken (17).

9. Kupplungsteil (2), offensichtlich zum Einsatz in einem Anhänger (1) nach einem der Ansprüche 1 bis einschließlich 7 vorgesehen.
